**Europäisches Patentamt**

(19) **European Patent Office**

**Office européen des brevets**

(11) Veröffentlichungsnummer: **0 188 480**

**B1**

(12) # EUROPÄISCHE PATENTSCHRIFT

(45) Veröffentlichungstag der Patentschrift:
14.12.88

(21) Anmeldenummer: 85903282.3

(22) Anmeldetag: 09.07.85

(86) Internationale Anmeldenummer:
PCT/EP 85/00336

(87) Internationale Veröffentlichungsnummer:
WO 86/00585 (30.01.86 Gazette 86/03)

(51) Int. Cl.⁴: **B 60 R 22/42**

(54) **GURTBAND-KLEMMVORRICHTUNG FÜR KRAFTFAHRZEUGSICHERHEITSGURTE.**

(30) Priorität: 09.07.84 DE 3425199

(43) Veröffentlichungstag der Anmeldung:
30.07.86 Patentblatt 86/31

(45) Bekanntmachung des Hinweises auf die Patenterteilung:
14.12.88 Patentblatt 88/50

(84) Benannte Vertragsstaaten:
DE FR GB IT SE

(56) Entgegenhaltungen:
DE-A-3 306 434
FR-A-2 537 003
GB-A-2 113 978
US-A-3 504 867
US-A-4 208 770

(73) Patentinhaber: TIBBE KG, Waldstrasse 2, D-8065
Erdweg (DE)

(72) Erfinder: TIBBE, Günter, Dom- Pedro- Strasse 17,
D-8000 München 19 (DE)

(74) Vertreter: Oedekoven, Wolf- Dieter, Dipl. Ing.,
Erhardtstrasse 8/V, D-8000 München 5 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Klemmvorrichtung der im Oberbegriff des Patentanspruchs 1 angegebenen Gattung.

Kraftfahrzeugsicherheitsgurte mit Gurtbandaufroller sind bekannt. Der Gurtbandaufroller wird am Kraftfahrzeug befestigt und weist eine Wickelwelle auf, auf welcher das Gurtband des Sicherheitsgurtes aufgespult ist, wenn der Sicherheitsgurt unbenutzt ist. Beim Anlegen des Sicherheitsgurtes wird das Gurtband vom Benutzer aus dem Gurtbandaufroller entgegen der Wirkung mindestens einer die Wickelwelle belastenden Drehfeder abgezogen, welche beim Ablegen des Sicherheitsgurtes die Wickelwelle in umgekehrter Richtung dreht, so daß das Gurtband sich wieder um dieselbe herumwickelt und in den Gurtbandaufroller zurückläuft. Die Wickelwelle ist bei angelegtem Sicherheitsgurt normalerweise drehbar, um dem den Sicherheitsgurt tragenden Kraftfahrzeuginsassen eine gewisse Bewegungsfreiheit zu lassen. Erst dann, wenn das Kraftfahrzeug eine bestimmte Verzögerung erfährt, wird die Wickelwelle gesperrt, so daß sie sich nicht mehr in derjenigen Richtung drehen kann, wie für den Gurtbandabzug aus dem Gurtbandaufroller erforderlich.

Bekannt sind ferner Klemmvorrichtungen für derartige Kraftfahrzeugsicherheitsgurte, welche dazu dienen, nach dem Sperren der Wickelwelle des Gurtbandaufrollers das sich von derselben weg erstreckende Gurtband zusätzlich festzuklemmen, um die weitere Bewegung des Gurtbandes in Abzugsrichtung aufgrund des sogenannten Filmspuleneffektes, nämlich des Zusammenziehens des Gurtbandwickels auf der blockierten Wickelwelle, zu verhindern. Dazu gehören auch Klemmvorrichtungen der im Oberbegriff des Patentanspruchs 1 angegebenen Art (FR-A-2 537 003).

Diese bekannten Klemmvorrichtungen sind in den Gurtbandumlenkbeschlag eingebaut, welcher an der B-Säule eines Kraftfahrzeugs zur Umlenkung des von dem am Fuße derselben angebrachten Gurtbandaufroller kommenden, sich bei angelegtem Sicherheitsgurt diagonal über die Schulter und die Brust des den Sicherheitsgurt tragenden Kraftfahrzeuginsassen erstreckenden Gurtbandes befestigt wird. Sie weisen ein Gehäuse in Form einer rechteckigen Hülse an einer am Kraftfahrzeug befestigbaren Grundplatte auf, durch welches das vom Gurtbandaufroller kommende Gurtband hindurchläuft, um dahinter ein ringartiges Umlenkglied zu umschlingen. Das Umlenkglied ist sozusagen kardanisch mit einem Schieber verbunden, welcher auf der Grundplatte in deren Längsrichtung verschieblich gelagert und an dem dem Umlenkglied abgewandten, in das Gehäuse ragenden Ende mit einem ersten Keil versehen ist, der auf der der Grundplatte abgewandten Seite eine gegenüber der Grundplatte und dem dazu parallel durch das Gehäuse hindurchlaufenden Gurtband geneigte Schrägfläche aufweist. Zwischen dieser Schrägfläche, deren Abstand von der Grundplatte zum Umlenkglied hin größer wird, und dem Gurtband ist im Gehäuse ein zweiter Keil angeordnet, welcher einerseits mit einer entsprechend geneigten Schrägfläche an der Schrägfläche des ersten Keils anliegt und andererseits eine zum Gurtband im wesentlichen parallele Klemmfläche für das Gurtband aufweist sowie im Gehäuse senkrecht zu den Schrägflächen der beiden Keile verschieblich geführt ist. Der Schieber ist mit dem ersten Keil vom zweiten Keil weg federbelastet, der Zweite Keil vom Gurtband weg. Sobald im Betrieb eine vorgegebene Gurtbandzugkraft überschritten wird, was jedenfalls dann geschieht, wenn das Kraftfahrzeug eine bestimmte Verzögerung erfährt und die Wickelwelle des Gurtbandaufrollers gesperrt sowie der den Sicherheitsgurt tragende Kraftfahrzeuginsasse nach vorne geschleudert wird, zieht das Gurtband über das Umlenkglied den Schieber entgegen der Wirkung seiner Federbelastung nach unten auf das Gehäuse zu, so daß der erste Keil den zweiten Keil entgegen der Wirkung von dessen Federbelastung auf das Gurtband zu bewegt und über das Gurtband gegen eine zu demselben im wesentlichen parallele Klemmfläche innen an der Vorderwand des Gehäuses drückt, um das Gurtband zwischen dieser Klemmfläche und der gegenüberliegenden Klemmfläche des zweiten Keils im Gehäuse festzuklemmen.

Der Erfindung liegt die Aufgabe zugrunde, eine Klemmvorrichtung der im Oberbegriff des Patentanspruchs 1 angegebenen Gattung zu schaffen, welche außergewöhnlich schnell anspricht, dennoch aber außergewöhnlich hohe Gurtbandklemmkräfte hervorzubringen erlaubt und dabei einen einfachen, kompakten und robusten Aufbau aufweist, also kostengunstig hergestellt werden kann, wenig Platz beansprucht und wenig störanfällig ist, ferner nicht zum Klappern neigt.

Diese Aufgabe ist durch die im kennzeichnenden Teil des Patentanzpruchs 1 angegebenen Merkmale gelöst. Vorteilhafte Ausgestaltungen der erfindungsgemäßen Klemmvorrichtung sind in den restlichen Patentansprüchen angegeben.

Nachstehend sind mehrere Ausführungsformen der erfindungsgemäßen Klemmvorrichtung anhang von Zeichnungen beispielsweise beschrieben. Darin zeigt schematisch:

Fig. 1 einen Längsschnitt einer Ausführungsform;

Fig. 2a und 2b den Längsschnitt gemäß Fig. 1 bzw. den Schnitt entlang der Linie IIb - IIb in Fig. 2a einer Variante des ersten Keils der Klemmvorrichtung nach Fig. 1;

Fig. 3a und 3b den Längsschnitt gemäß Fig. 1 bzw. den Schnitt entlang der Linie IIIb - IIIb in Fig. 3a einer weiteren Variante des ersten Keils der Klemmvorrichtung nach Fig. 1; und
Fig. 4 eine perspektivische Explosionsdarstellung einer Variante des Gehäuses der Klemmvorrichtung nach Fig. 1.

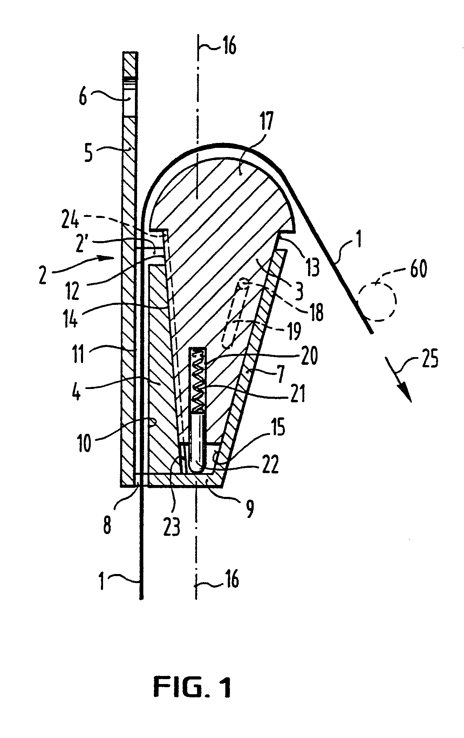

Die Klemmvorrichtung gemäß Fig. 1 ist als Gurtbandumlenkbeschlag für das Gurtband 1 eines einem Vordersitz zugeordneten Kraftfahrzeugsicherheitsgurtes mit Gurtbandaufroller ausgebildet und wird an der B-Säule des Kraftfahrzeugs befestigt, um das vom nicht gezeigten, unterhalb der dargestellten Klemmvorrichtung am Fuße des B-Säule angebrachten Gurtbandaufroller kommende Gurtband 1 umzulenken, so daß es sich bei angelegtem Sicherheitsgurt diagonal über die Schulter und die Brust des den Sicherheitsgurt tragenden Kraftfahrzeuginsassen erstreckt. Der Gurtbandaufroller weist eine durch mindestens eine Drehfeder belastetete Wickelwelle auf, auf welche das Gurtband 1 beim Ablegen des Sicherheitsgurtes unter der Wirkung der Drehfeder oder Drehfedern aufgewickelt wird, ferner einen Sperrklinkenmechanismus zum Blockieren der Wickelwelle bei einer bestimmten Kraftfahrzeugverzögerung und/oder einer bestimmten Gurtbandbeschleunigung in Richtung des Gurtbandabzugs aus dem Gurtbandaufroller, so daß die Wickelwelle sich nicht mehr in derjenigen Richtung drehen kann, wie für den Gurtbandabzug aus dem Gurtbandaufroller erforderlich. Dazu wird der Sperrklinkenmechanismus von einem auf diese Kraftfahrzeugverzögerung bzw. Gurtbandbeschleunigung ansprechenden Sensor betätigt.

Die Klemmvorrichtung gemäß Fig. 1 besteht im wesentlichen aus einem Gehäuse 2, einem ersten Keil 3 und einem zweiten Keil 4. Die beiden Keile 3 und 4 sind im Gehäuse 2 angeordnet, durch welches das vom Gurtbandaufroller kommende Gurtband 1 hindurchläuft. Der erste Keil 3 dient zur Bewegung des zweiten Keils 4, der zweite Keil 4 zum Festklemmen des Gurtbandes 1 im Gehäuse 2.

Das Gehäuse 2 ist kastenförmig ausgebildet und mit einer am Kraftfahrzeug befestigbaren, längeren Grundplatte 5 versehen, welche eine Öffnung 6 zur Aufnahme einer Befestigungsschraube aufweist. Weiterhin ist das Gehäuse 2 mit einer gegenüber der Grundplatte 5 geneigten Vorderwand 7 und einem Querschlitz 8 im Boden 9 versehen. Durch den Querschlitz 8 erstreckt sich das Gurtband 1. Auf der dem Boden 9 abgewandten Seite ist das Gehäuse 2 offen.

Die beiden Keile 3 und 4 sind zwischen der Vorderwand 7 des Gehäuses 2 und dem sich durch dasselbe hindurch erstreckenden Gurtband 1 angeordnet, und zwar der erste Keil 3 neben der Vorderwand 7 und der zweite Keil 4 neben dem Gurtband 1. Der zweite Keil 4 weist auf der dem Gurtband 1 benachbarten Seite eine zu demselben parallele Klemmfläche 10 auf, welche beispielsweise durch Aufrauhen der entsprechenden Oberfläche des zweiten Keils 4 hervorgebracht oder von einem gesonderten Reibbelag gebildet sein kann, der am zweiten Keil 4 befestigt ist. Auch das Gehäuse 2 ist auf der Grundplatte 5 mit einer solchen Klemmfläche 11 versehen, welche der Klemmfläche 10 des zweiten Keils 4 gegenüberliegt. Zwischen den beiden Klemmflächen 10 und 11 erstreckt sich das Gurtband 1 durch das Gehäuse 2 hindurch.

Der erste Keil 3 bildet das Umlenkglied für das Gurtband 1 und ist auf der dem Zweiten Keil 4 benachbarten Seite mit einer ersten Schrägfläche 12 sowie auf der der Vorderwand 7 des Gehäuses 2 benachbarten Seite mit einer zweiten Schrägfläche 13 versehen, welche jeweils an einer entsprechend geneigten Schrägfläche 14 bzw. 15 des zweiten Keils 4 bzw. der Vorderwand 7 anliegen und miteinander einen spitzen Winkel einschließen. Die erste Schrägfläche 12 des ersten Keils 3 schließt mit der zum Gurtband 1 im Gehäuse 2 parallelen Mittelebene 16 des ersten Keils 3 einen verhältnismäßig kleinen Winkel ein, die zweite Schrägfläche 13 des ersten Keils 3 dagegen einen verhältnismäßig großen, jedenfalls größeren Winkel.

An dem breiteren, in Fig. 1 oberen Ende ist der erste Keil 3 mit einem abgerundeten Kopf 17 versehen, welcher vom Gurtband 1 umschlungen ist, das von dort bei angelegtem Sicherheitsgurt diagonal über die Schulter und die Brust des den Sicherheitsgurt tragenden Kraftfahrzeuginsassen zu einer Verschlußschnalle läuft, welche mit dem Boden des Kraftfahrzeugs verbunden ist. Der erste Keil 3 ist im Gehäuse 2 parallel zu dessen Vorderwand 7 bzw. der Schrägfläche 15 derselben beweglich geführt, und zwar mittels zweier gestrichelt angedeuteter äußerer Querstifte 18, welche in zwei ebenfalls gestrichelt angedeuteten, zur Vorderwand 7 bzw. zur Schrägfläche 15 parallelen Langlöchern 19 der beiden Seitenwände 2' des Gehäuses 2 gleitend aufgenommen sind. Ferner ist der erste Keil 3 aus demjenigen Keilspalt heraus federbelastet, welchen die Schrägfläche 15 der Vorderwand 7 des Gehäuses 2 einerseits und die Schrägfläche 14 des zweiten Keils 4 andererseits begrenzen bzw. bilden. Dazu ist der erste Keil 3 in der Mittelebene 16 mit mindestens einem Sackloch 20 versehen, in welchem eine Druckfeder 21 und ein axial verschiebbarer Druckstift 22 angeordnet sind, der sich auf dem Boden 9 des Gehäuses 2 abstützt.

Der zweite Keil 4 ist mit dem ersten Keil 3 derart formschlüssig verbunden, daß die beiden Keile 3 und 4 an den beiden aneinanderliegenden Schrägflächen 12 und 14 gegenseitig gleitend bewegbar sind. Dazu ist im dargestellten Fall der zweite Keil 4 mit zwei Rippen 23 und der erste Keil 3 mit zwei korrespondierenden Nuten 24 zur Aufnahme je einer Rippe 23 versehen, wobei die Rippen 23 und die Nuten 24 sich parallel zu den beiden aneinanderliegenden Schrägflächen 12 und 14 des ersten Keils 3 bzw. des zweiten Keils 4 erstrecken. Statt dessen könnte zwischen den beiden Keilen 3 und 4 beispielsweeise auch eine entsprechend orientierte Schwalbenschwanzverbindung vorgesehen werden.

Die in Fig. 1 dargestellte und geschilderte Klemmvorrichtung funktioniert im Betrieb folgendermaßen. Sobald die Wickelwelle des nicht dargestellten Gurtbandaufrollers aufgrund einer bestimmten Kraftfahrzeugverzögerung und/oder einer bestimmten Gurtbandbeschleunigung in Richtung des Gurtbandabzugs aus dem Gurtbandaufroller gesperrt wird und die durch den Pfeil 25 veranschaulichte Gurtbandzugkraft einen vorgegebenen Wert überschreitet, drückt das Gurtband 1 den ersten Keil 3 entgegen der Wirkung der Druckfeder oder Druckfedern 21 in Fig. 1 nach unten. Der erste Keil 3 drückt dabei seinerseits den sich auf dem Boden 9 des Gehäuses 2 abstützenden zweiten Keil 4 mit seiner Klemmfläche 10 gegen das benachbarte Gurtband 1 und letzteres gegen die Klemmfläche 11 des Gehäuses 2, so daß das Gurtband 1 im Gehäuse 2 festgeklemmt ist. Dieses Festklemmen geschieht außerordentlich schnell, weil der erste Keil 3 zwei Schrägflächen, nämlich die beiden Schrägflächen 12 und 13, aufweist, deren Wirkungen sich bei der Verschiebung des zweiten Keils 4 auf dem Boden 9 des Gehäuses 2 gegen das Gurtband 1 addieren, wobei der Beitrag der auf der Schrägfläche 15 der Vorderwand 7 des Gehäuses 2 gleitenden zweiten Schrägfläche 13 aufgrund der stärkeren Neigung dieser beiden Schrägflächen 13 und 15 gegenüber der Mittelebene 16 des ersten Keils 3 größer ist. Selbst wenn diese Neigung zur Erzielung sehr hoher Ansprechgeschwindigkeiten verhältnismäßig groß gewählt wird, lassen sich dennoch außergewöhnlich hohe Gurtbandklemmkräfte hervorbringen, und zwar infolge der relativ geringen Neigung der ersten Schrägfläche 12 des ersten Keils 3 gegenüber dessen Mittelebene 16, welche auf der entsprechend geneigten Schrägfläche 14 des zweiten Keils 4 gleitet. Diese Neigung kann gegebenenfalls im Bereich der Selbsthemmung liegen, da auch dann die Druckfeder oder Druckfedern 21 den ersten Keil 3 wieder in Fig. 1 nach oben bewegen, sobald die Gurtbandzugkraft 25 wieder abfällt, so daß der zweite Keil 4 in Fig. 1 nach rechts läuft und beide Keile 3 und 4 die in Fig. 1 dargestellte Lösestellung einnehmen, in welcher die Klemmvorrichtung geöffnet und unwirksam ist.

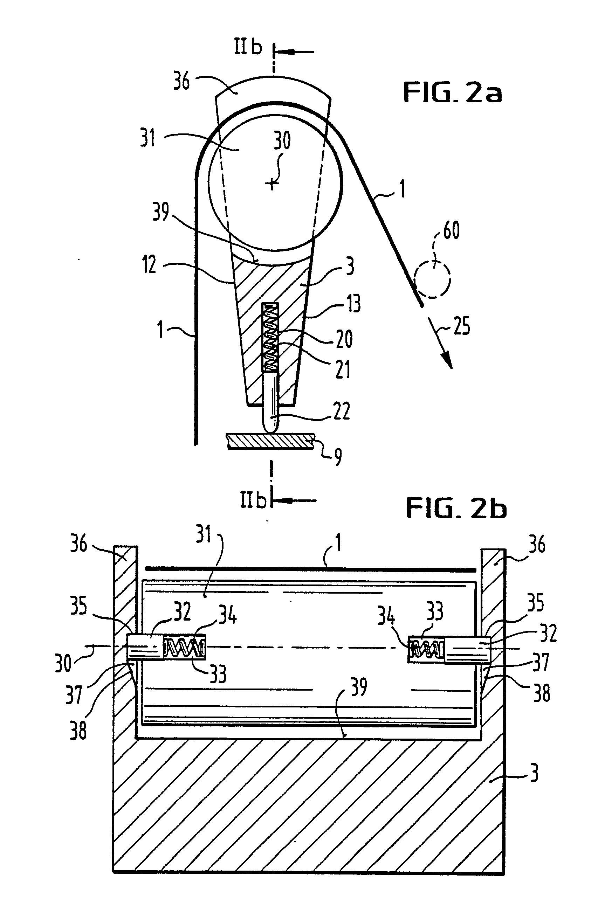

Gemäß Fig. 2a und 2b kann zur Verminderung des Reibwiderstandes an der Gurtbandumlenkstelle der erste Keil 3 statt des Kopfes 17 auch mit einer um eine Achse 30 drehbar gelagerten Kopfrolle 31 versehen werden, welche vom Gurtband 1 umschlungen ist. Die Kopfrolle 31 weist zwei seitliche Lagerzapfen 32 auf, welche jeweils in einem stirnseitigen Sackloch 33 der Kopfrolle 31 axial verschiebbar, durch eine im Sackloch 33 angeordnete Druckfeder 34 belastet und in einem inneren Sackloch 35 einer benachbarten Zunge 36 des ersten Keils 3 aufgenommen sind, wobei von den beiden Sacklöchern 35 der beiden die Kopfrolle 31 umgreifenden Zungen 36 je eine zum schmaleren Ende des ersten Keils 3 hin gerichtete Nut 37 mit schrägem Boden 38 ausgeht, welcher den Boden des zugehörigen Sacklochs 35 mit der Innenfläche der zugehörigen Zunge 36 verbindet. Wenn die Klemmvorrichtung bei Überschreiten der vorgegebenen Gurtbandzugkraft ausgelost wird, drückt das Gurtband 1 die Kopfrolle 31 senkrecht zur Drehachse 30 entgegen der Wirkung der Belastung durch die Druckfedern 34 in Anlage an eine entsprechend konkav ausgebildete Gegenfläche 39 des ersten Keils 3 unterhalb der Kopfrolle 31, so daß die Lagerzapfen 32 nicht die hohe Belastung der Kopfrolle 31 aufnehmen müssen und nicht abbrechen können, sondern diese Belastung vielmehr unmittelbar von der Kopfrolle 31 auf den ersten Keil 3 übertragen wird. Bei dieser Bewegung der Kopfrolle 31 gleiten die beiden Lagerzapfen 32 auf den schrägen Böden 38 der Nuten 37 und werden sie entsprechend in die Sacklöcher 33 der Kopfrolle 31 zurückgedrängt, und zwar entgegen der Wirkung der Druckfedern 34, welche die Rückbewegung der Kopfrolle 31 in die Ausgangsstellung gemäß Fig. 2a und 2b im Verein mit den schrägen Böden 38 der Nuten 37 bewirken, sobald die Gurtbandzugkraft 25 wieder abfällt.

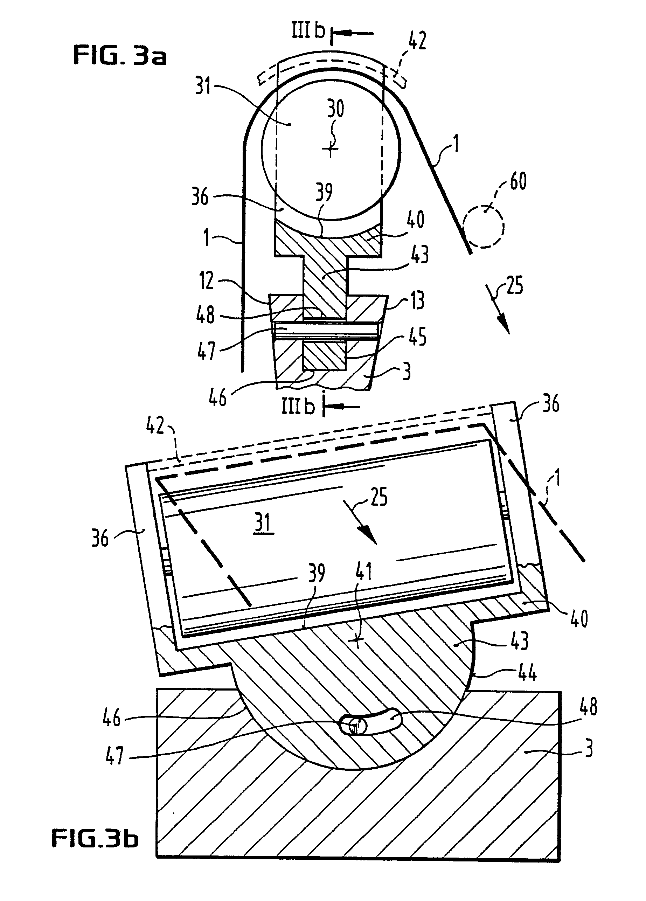

Gemäß Fig. 3a und 3b kann die Kopfrolle 31 des ersten Keils 3 an einem Schwenkglied 40 vorgesehen werden, welches am ersten Keil 3 um eine zu dessen Mittelebene 16 senkrechte Achse 41 schwenkbar abgestützt ist, so daß die Kopfrolle 31 sich entsprechend der Richtung der Gurtbandzugkraft 25 einstellen kann. Auch der Kopf 17 des ersten Keils 3 gemäß Fig. 1 kann an einem solchen Schwenkglied 40 vorgesehen werden, welches mit einer das Gurtband 1 führenden Abdeckung 42 für den Kopf 17 bzw. die Kopfrolle 31 versehen werden kann, wie in Fig. 3a und 3b mit gestrichelten Linien angedeutet.

Gemäß Fig. 3a und 3b weist das mit den beiden Zungen 36 sowie der Gegenfläche 39 versehene Schwenkglied 40 einen unteren Vorsprung 43 mit einer kreisbogenförmigen, zur Schwenkachse 41 konzentrischen Außenfläche 44 auf, welcher in einer Ausnehmung 45 des ersten Keils 3 aufgenommen ist, die einen entsprechend kreisbogenförmigen Boden 46 aufweist, auf welchem die Außenfläche 44 des Vorsprungs 43 des Schwenkggliedes 40 beim Verschwenken desselben um die imaginäre Achse 41 gleiten kann. Das Schwenkglied 40 ist mittels eines zur Schwenkachse 41 parallelen Querstiftes 47 mit dem ersten Keil 3 verbunden, welcher in letzteren eingesetzt ist und ein kreisbogenförmiges, zur Schwenkachse 41 konzentrisches Langloch 48 des Vorsprungs 43 des Schwenkglieds 40 mit Spiel durchsetzt.

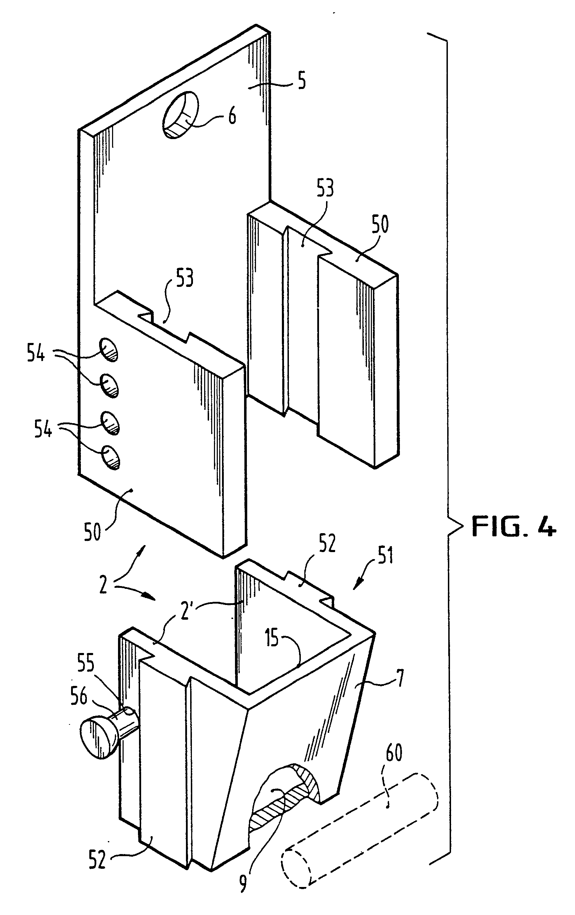

Gemäß Fig. 4 kann das Gehäuse 2 zur Höhenverstellung der Gurtbandumlenkstelle zweiteilig ausgebildet werden. Im dargestellten Fall besteht es aus der am Kraftfahrzeug befestigbaren Grundplatte 5, welche zwei zueinander parallele Seitenschenkel 50 aufweist, und aus einem U-förmigen Aufnehmer 51 für die beiden Keile 3 und 4, welcher an der Grundplatte 5 verstellbar ist und die beiden Seitenwände 2', die Vorderwand 7 mit der Schrägfläche 15 und den Boden 9 des Gehäuses 2 aufweist. Der Aufnehmer 51 ist zwischen den beiden Seitenschenkeln 50 der Grundplatte 5 an derselben entlang verschiebbar und an den beiden Seitenwänden 2' jeweils mit einer äußeren, schwalbenschwanzförmigen Längsfeder 52 versehen, welche in einer inneren, entsprechend schwalbenschwanzförmigen Längsnut 53 des benachbarten Seitenschenkels 50 der Grundplatte 5 gleitend aufgenommen ist. Zur Fixierung des Aufnehmers 51 an der Grundplatte 5 in unterschiedlichen Relativstellungen weist ein Seitenschenkel 50 der Grundplatte 5 eine Reihe von Bohrungen 54 und die benachbarte Seitenwand 2' des Aufnehmers 51 eine Bohrung 55 auf, in welche ein Bolzen 56 durch die mit der Bohrung 55 jeweils fluchtende Bohrung 54 der Bohrungsreihe des Seitenschenkels 50 der Grundplatte 5 hindurch einsetzbar ist. Statt dessen kann die Reihe von Bohrungen 54 auch in einer Seitenwand 2' des Aufnehmers 51 und die einzelne Bohrung 55 im benachbarten Seitenschenkel 50 der Grundplatte 5 vorgesehen werden, ebenso wie es möglich ist, beide Seitenschenkel 50 der Grundplatte 5 und beide Seitenwände 2' des Aufnehmers 51 entsprechend auszugestalten, um den Aufnehmer 51 auf beiden Seiten an der Grundplatte 5 festlegen zu können.

Die Klemmvorrichtung muß nicht unbedingt als Gurtbandumlenkbeschlag ausgebildet sein, wie dargestellt und geschildert, sondern kann auch in den Gurtbandaufroller integriert werden. Es ist durchaus möglich, das Gehäuse 2 und die beiden Keile 3 sowie 4 im Gurtbandaufroller hinter dessen Wickelwelle anzuordnen, statt sie als Gurtbandumlenkbeschlag auszubilden oder in einen solchen zu integrieren.

Wenn auch die Keile 3 und 4 als Klemmglieder bevorzugt sind, so können doch andere Klemmglieder verwendet werden, ebenso wie es möglich ist, nur ein bewegliches Klemmglied vorzusehen. Wesentlich bei der erfindungsgemäßen Klemmvorrichtung ist vor allem, daß ein Klemmglied vorgesehen ist, welches im Gehäuse 2 zum Festklemmen des Gurtbandes 1 in eine Klemmstellung etwa im Bereich der Selbsthemmung bewegbar ist, und daß dieses Klemmglied selbst oder ein mit demselben zusammenwirkendes zweites Klemmglied in eine Zwischenstellung bewegbar ist, in welcher die Selbsthemmung mit Sicherheit aufgehoben ist, so daß das Klemmglied bzw. das erste Klemmglied in die Lösestellung zur Gurtbandfreigabe zurückgestellt werden kann. Beispielsweise kann eine exzentrisch gelagerte Walze als Klemmglied bzw. erstes Klemmglied vorgesehen werden, welche in die Klemmstellung verschwenkbar und selbst aus derselben senkrecht vom Gurtband 1 weg verschiebbar ist bzw. mit einem zweiten Klemmglied auf der anderen Seite des Gurtbandes 1 zusammenwirkt, das senkrecht vom Gurtband 1 weg verschiebbar ist, um das Rückschwenken in die Lösestellung zur Gurtbandfreigabe zu ermöglichen.

Bei der Ausbildung der Klemmvorrichtung als Gurtbandumlenkbeschlag kann eine mit gestrichelten Linien angedeutet Führung 60 für das Gurtband 1 vorgesehen werden, welche einen ausreichenden Umschlingungswinkel desselben um den Kopf 17 bzw. die Kopfrolle 31 des ersten Keils 3 gewährleistet und als Öse ausgebildet sein kann, welche am Gehäuse 2 bzw. dessen Grundplatte 5, vorzugsweise höhenverstellbar, oder an einer gesonderten, am jeweiligen Kraftfahrzeug vorzugsweise höhenverstellbaren Grundplatte oder am höhenverstellbaren Aufnehmer 51 des Gehäuses 2 angelenkt sein kann.

## Patentansprüche

1. Klemmvorrichtung für das Gurtband von Kraftfahrzeugsicherheitsgurten mit Gurtbandaufroller, welche zwei in einem Gehäuse (2) angeordnete Keile (3, 4) aufweist, die mit zwei gegenüber dem durch das Gehäuse (2) hindurchlaufenden Gurtband (1) geneigten Schrägflächen (12, 14) aneinanderliegen und zum Festklemmen des Gurtbandes (1) bei Überschreiten einer vorgegebenen Gurtbandzugkraft nach dem Blockieren des Gurtbandaufrollers entgen der Wirkung einer Federbelastung (21) verschiebbar sind, wobei der eine Keil (3) auf der dem Gurtbandaufroller abgewandten Seite mit dem Gurtband (1) zusammenwirkt, um parallel zu dem durch das Gehäuse (2) hindurchlaufenden Gurtband (1) verschoben zu werden und den anderen Keil (4) gegen dasselbe zu schieben, so daß es zwischen diesem zweiten Keil (4) und dem Gehäuse (2) festgeklemmt wird, dadurch gekennzeichnet, daß der erste Keil (3) auf der dem zweiten Keil (4) abgewandten Seite eine zweite Schrägfläche (13) aufweist, welche an einer Schrägfläche (15) des Gehäuses (2) anliegt und mit der ersten Schrägfläche (12) des ersten Keils (3) einen spitzen Winkel einschließt, wobei der Winkel zwischen der zweiten Schrägfläche (13) und der zu dem durch das Gehäuse (2) hindurchlaufenden Gurtband (1) parallelen Mittelebene (16) des ersten Keils (3) größer als der Winkel zwischen der ersten Schrägfläche (12) und der Mittelebene (16) ist, welcher dem etwa im Bereich der Selbsthemmung liegenden Winkel entspricht, den die Schrägfläche (14) des zweiten Keils (4) mit dessen Gurtband-Klemmfläche (10) einschließt.

2. Klemmvorrichtung nach Anspruch 1, dadurch gekennzeichnet, daß der erste Keil (3) parallel zur Schrägfläche (15) des Gehäuses (2) beweglich geführt und aus dem Keilspalt zwischen dieser Schrägfläche (15) und de Schrägfläche (14) des zweiten Keils (4) heraus federbelastet ist, welcher mit dem ersten Keil (3) derart formschlüssig verbunden ist, daß die beiden Keile (3, 4) an den beiden aneinanderliegenden Schrägflächen (12, 14) gegenseitig gleitend bewegbar sind.

3. Klemmvorrichtung nach Anspruch 1 oder 2, dadurch gekennzeichnet, daß der erste Keil (3) einen abgerundeten Kopf (17) aufweist, welcher vom Gurtband (1) umschlungen ist.

4. Klemmvorrichtung nach Anspruch 1 oder 2, dadurch gekennzeichnet, daß der erste Keil (3) eine drehbar gelagerte Kopfrolle (31) aufweist, welche vom Gurtband (1) umschlungen ist.

5. Klemmvorrichtung nach Anspruch 4, dadurch gekennzeichnet, daß die Kopfrolle (31) senkrecht zur Drehachse (30) entgegen der Wirkung einer Federbelastung in Anlage an eine vorzugsweise entsprechend konkav ausgebildete Gegenfläche (39) des ersten Keils (3) bewegbar ist.

6. Klemmvorrichtung nach einem der vorstehenden Ansprüche, dadurch gekennzeichnet, daß das Gehäuse (2) und die beiden Keile (3, 4) als Gurtbandumlenkbeschlag ausgebildet sind.

7. Klemmvorrichtung nach Anspruch 6, dadurch gekennzeichnet, daß das Gehäuse (2) zur Höhenverstellung der Gurtbandumlenkstelle zweiteilig ausgebildet ist und aus einer am Kraftfahrzeug befestigbaren Grundplatte (5) sowie einem Aufnehmer (51) für die beiden Keile (3, 4) besteht, welcher an der Grundplatte (5) verstellbar ist.

8. Klemmvorrichtung nach Anspruch 7, dadurch gekennzeichnet, daß die Grundplatte (5) zwei zueinander parallele Seitenschenkel (50) aufweist, zwischen welchen der U-förmige Aufnehmer (51) an der Grundplatte (5) entlang verschiebbar ist, wobei ein Seitenschenkel (50) der Grundplatte (5) oder eine Seitenwand (2') des Aufnehmers (51) eine Reihe von Bohrungen (54) und die benachbarte Seitenwand (2') des Aufnehmers (51) bzw. der benachbarte Seitenschenkel (50) der Grundplatte (5) eine Bohrung (55) aufweist und in letztere sowie die mit derselben jeweils fluchtende Bohrung (54) der Bohrungsreihe ein Bolzen (56) zur Fixierung des Aufnehmers (51) an der Grundplatte (5) einsetzbar ist.

9. Klemmvorrichtung nach Anspruch 8, dadurch gekennzeichnet, daß zwischen den beiden Seitenschenkeln (50) der Grundplatte (5) und den beiden Seitenwänden (2') des Aufnehmers (51) jeweils eine Schwalbenschwanzführung (52, 53) vorgesehen ist.

10. Klemmvorrichtung nach einem der Ansprüche 6 bis 9 in Verbindung mit Anspruch 3, 4 oder 5, gekennzeichnet durch eine vorzugsweise höhenverstellbare Führung (60) für das Gurtband (1) zur Vergrößerung des Umschlingungswinkels desselben um den Kopf (17) bzw. die Kopfrolle (31) des ersten Keils (3).

11. Klemmvorrichtung nach einem der Ansprüche 6 bis 9 in Verbindung mit Anspruch 3, 4 oder 5 oder nach Anspruch 10, dadurch gekennzeichnet, daß der Kopf (17) bzw. die Kopfrolle (31) des ersten Keils (3) an einem Schwenkglied (40) vorgesehen ist, welches am ersten Keil (3) um eine zu dessen Mittelebene (16) senkrechte Achse (41) schwenkbar abgestützt ist.

12. Klemmvorrichtung nach Anspruch 11, dadurch gekennzeichnet, daß das Schwenkglied (40) eine das Gurtband (1) führende Abdeckung (42) für den Kopf (17) bzw. die Kopfrolle (31) aufweist.

13. Klemmvorrichtung nach einem der Ansprüche 1 bis 5, dadurch gekennzeichnet, daß das Gehäuse (2) und die beiden Keile (3, 4) im Gurtbandaufroller angeordnet sind.

**Claims**

1. Clamping device for the strap of motor vehicle safety belts with a belt take-up reel assembly, having two wedges (3, 4) arranged in a housing (2) and having mutually engaging inclined faces (12, 14) inclined with respect to the strap (1) passing through the housing (2) the wedges being displaced against the action of spring loading (21) for clamping or jamming the strap (1) when a predetermined belt tension force is exceeded after locking of the take-up reel, the one wedge (3) co-operating with the strap (1) on that side which is furthest from the take-up reel, to be displaced parallel to the strap (1) passing through the housing (2), and to shift the other wedge (4) against it, so that it is jammed between this second wedge (4) and the housing (2), characterised in that the first wedge (3) has a second inclined surface (13) on that face of it which is furthest from the second wedge (4), this surface engaging an inclined surface (15) of the housing (2) and making an acute included angle with the first inclined surface (12) of the first wedge (3), the angle between the second inclined surface (13) and the central plane (16) of the first wedge (3) parallel to the strap (1) where it passes through the housing (2) being greater than the angle between the first inclined surface (12) and the central plane (16), which corresponds to that angle, lying substantially in the range of self-jamming, which is included between the inclined surface (14) of the second wedge (4) and its strap-jamming surface (10).

2. Clamping device according to claim 1 characterised in that the first wedge (3) is movably guided parallel to the inclined surface (15) of the housing (2) and is spring-urged out of the wedge-shaped gap between this inclined surface (15) and the inclined surface (14) of the second wedge (4) which is connected mechanically to the first wedge (3) in such a way that the two wedges (3, 4) are mutually slidably movable along their two mutually engaging inclined surfaces (12, 14).

3. Clamping device according to claim 1 or 2 characterised in that the first wedge (3) has a rounded head (17) which is embraced by the seat belt (1).

4. Clamping device according to claim 1 or 2 characterised in that the first wedge (3) has a rotatably mounted head roller (31) which is embraced by the seat belt (1).

5. Clamping device according to claim 4 characterised in that the head roller (31) is movable perpendicular to the axis of rotation (30) and against the action of spring-loading into engagement with a counter-surface (39) of the first wedge (3) this surface preferably being of corresponding concave shape.

6. Clamping device according to one of the foregoing claims characterised in that the housing (2) and wedges (3, 4) are formed as a seat belt direction-changing anchorage.

7. Claming device according to claim 6 characterised in that the housing (2) is made in two parts for adjusting the height of the belt direction-changing point and comprises a base plate (5) for attachment to the motor vehicle and a receptacle (51) for the two wedges (3, 4), the receptacle being adjustable with respect to the base plate (5).

8. Clamping device according to claim 7 characterised in that the base plate (5) has two mutually parallel side limbs (50) between which the U-shaped receptacle (51) is slidable on the base plate (5) one of the side limbs (50) of the base plate (5) or a side wall (2') of the receptacle (51) having a row of holes (54) and the adjacent side wall (2') of the receptacle (51) or the adjacent side limb (50) of the base plate (5) having a hole (55), and a peg (56) being capable of insertion in the latter hole and in that hole (54) of the row of holes which is aligned with it, in order to locate the receptacle (51) on the base plate (5).

9. Clamping device according to claim 8 characterised in that a dove tail guide (52, 53) is provided between each of the two side limbs (50) of the base plate (5) and the two side walls (2') of the receptacle (51).

10. Clamping device according to one of claims 6 to 9 in conjunction with claim 3, 4 or 5 characterised by a guide (60), preferably adjustable in height, for the seat belt (1) to increase the angle of embrace of the latter around the head (17) or the head roller (31) of the first wedge (3).

11. Clamping device according to one of claims 6 to 9 in conjunction with claim 3, 4 or 5 or according to claim 10, characterised in that the head (17) or the head roller (31) of the first wedge (3) is provided on a pivoting member (40) which is supported on the first wedge (3) to pivot about an axis (41) perpendicular to its central plane (16).

12. Clamping device according to claim 11, characterised in that the pivoting member (40) has a cover (42) for the head (17) or head roller (31), guiding the seat belt (1).

13. Clamping device according to one of claims 1 to 5 characterised in that the housing (2) and the two wedges (3, 4) are arranged in the seat belt take-up reel assembly.

**Revendications**

1. Dispositif de serrage pour la sangle d'une ceinture de sécurité de véhicule automobile, comportant deux coins (3, 4) disposés dans un boîtier (2), qui sont contigus par deux surfaces obliques (12, 14) inclinées en regard de la sangle (1) qui traverse le boîtier (2), et sont déplaçables en sens contraire de l'action d'une charge de ressort (21) afin d'assurer le blocage de la sangle (1) lors du dépassement d'une force prédéterminée de traction de sangle après le blocage de l'enrouleur de sangle, l'un des coins (3) coopérant avec la sangle (1) sur la face opposée à l'enrouleur de sang le pour se déplacer parallèlement à la sangle (1) qui traverse le boîtier (2) et pour pousser l'autre coin (4) contre elle, de manière à ce qu'elle soit bloquée entre ce deuxième coin (4) et le boîtier (2), caractérisé en ce que le premier coin (3) présente sur sa face opposée au deuxième coin (4) une deuxième surface oblique (13) qui s'appuie sur une surface oblique (15) du boîtier (2) et forme un angle aigu avec la première surface oblique (12) du premier coin (3), et en ce que l'angle de la deuxième surface oblique (13) avec le plan médian (16) du premier coin (3) parallèle à la sangle (1) traversant le boîtier (2) est plus grand que l'angle de la première surface oblique (12) avec ledit plan médian (16), lequel correspond à l'angle situé approximativement dans le domaine du blocage automatique que forme la surface oblique (14) du deuxième coin (4) avec sa surface de serrage de la sangle (10).

2. Dispositif de serrage selon la revendication 1, caractérisé en ce que le premier coin (3) est guidé pour se déplacer parallèlement à la surface oblique (15) du boîtier (2) et est soumis à une charge de ressort dans la direction hors de la fente en coin entre cette surface oblique (15) et la surface oblique (14) du deuxième coin (4), qui est solidaire mécaniquement du premier coin (3) de telle sorte que les deux coins (3, 4) peuvent se déplacer en glissant l'un par rapport à l'autre par leurs deux surfaces obliques (12, 14) contigües.

3. Dispositif de serrage selon l'une des revendications 1 et 2, caractérisé en ce que le premier coin (3) présente une tête arrondie (17) qui est enserrée par la sangle (1).

4. Dispositif de serrage selon l'une des revendications 1 et 2, caractérisé en ce que le premier coin (3) présente une poulie de tête (31) montée mobile en rotation et qui est enserrée par la sangle (1).

5. Dispositif de serrage selon la revendication 4, caractérisé en ce que la poulie de tête (31) peut être déplacée perpendiculairement à l'axe de rotation (30), en sens contraire de l'effet d'une charge par ressort, jusqu'à l'appui sur une contre-surface (39) du premier coin (3), de préférence présentant une concavité correspondante.

6. Dispositif de serrage selon l'une des revendications précédentes, caractérisé en ce que le boîtier (2) et les deux coins (3, 4) constituent une armature d'inversion de sangle.

7. Dispositif de serrage selon la revendication 6, caractérisé en ce que le boîtier (2) est réalisé en deux parties pour le réglage en hauteur de l'endroit d'inversion de la sangle et est constitué par une plaque de base (5) pouvant être fixée sur le véhicule ainsi que par un réceptacle (51) pour les deux coins (3, 4), qui peut être déplacé sur la plaque de base (5).

8. Dispositif selon la revendication 7, caractérisé en ce que la plaque de base (5) présente deux ailes latérales (50) parallèles entre lesquelles le réceptacle en forme d'U (51) peut être déplacé le long de la plaque de base (5), une aile latérale (50) de la plaque de base (5) ou une paroi latérale (2') du réceptacle (51) présentant une série de perçages (54) et la paroi latérale (2') voisine du réceptacle (51) ou l'aile latérale (50) voisine de la plaque de base (5) présentant un perçage (55), dans lequel un boulon (56) peut être monté ainsi que dans le perçage (54) de la série de perçages situé dans son alignement, pour fixer le réceptacle (51) sur la plaque de base.

9. Dispositif de serrage selon la revendication 8, caractérisé en ce qu'il est prévu entre chaque aile latérale (50) de la plaque de base (5) et la paroi latérale (2') voisine du réceptacle (51) un guidage à queue d'aronde (52, 53).

10. Dispositif de serrage selon l'une des revendications 6 à 9 en combinaison avec l'une des revendications 3 à 5, caractérisé par un guidage (60), de préférence réglable en hauteur, de la sangle (1) afin d'augmenter l'angle d'enroulement de celle-ci autour de la tête (17) ou de la poulie de tête (31) du premier coin (3).

11. Dispositif de serrage selon l'une des revendications 6 à 9 en combinaison avec l'une des revendications 3 à 5 ou selon la revendication 10, caractérisé en ce que la tête (17) ou la poulie de tête (31) du premier coin (3) est prévue avec un élément pivotant (40), qui s'appuie sur le premier coin (3) et peut pivoter autour d'un axe (41) perpendiculaire au plan médian (16) de celui-ci.

12. Dispositif de serrage selon la revendication 11, caractérisé en ce que l'élément pivotant (40) présente un couvercle de guidage (42) de la sangle (1) pour la tête (17) ou pour la poulie de tête (31).

13. Dispositif de serrage selon l'une des revendications 1 à 5, caractérisé en ce que le boîtier (2) et les deux coins (3, 4) sont disposés dans l'enrouleur de sangle.

FIG. 1

IIb

36

FIG. 2a

31

30

39

12

3

13

20

21

22

9

1

1

60

25

IIb

FIG. 2b

36

31

1

36

35

32

34

34

33

35

30

33

32

37

37

38

39

38

3

## FIG. 3a

## FIG.3b

FIG. 4